# EUROPEAN PATENT APPLICATION

(11) **EP 1 892 504 A2**
(43) Date of publication of application: **27.02.2008**
(21) Application number: 07114551.0
(22) Date of filing: 17.08.2007
(51) Int. Cl.: G01C 21/16, G01C 25/00

(54) **Method and system for detection and remediation of the degradation of the sensor signal in a monitoring device**

(30) Priority: 21.08.2006 US 465895
(71) Applicant: Honeywell International Inc., Morristown NJ 07962 (US)
(72) Inventor: Fregene, Kingsley O.C., Andover, MN 55304 (US); Ariyur, Kartik B., Minneapolis, MN 55409 (US)
(74) Representative: Haley, Stephen

(57) **Abstract**

A method and system for detection and remediation of sensor degradation in a monitoring device (160) is disclosed. The method comprises defining or selecting a monitor signal (164), and setting at least one monitor signal range bounded by one or more upper thresholds and one or more lower thresholds for detecting degradation and/or shut-off. At least one measured sensor output signal is selected from the monitoring device that is within the monitor signal range. A predicted proxy sensor signal is generated concurrently with the measured sensor output signal in real-time. The predicted proxy sensor signal is blended with the measured sensor output signal when shut-down is impending or close to being recovered from. The predicted proxy sensor signal is used in place of the measured sensor output signal when the monitor signal crosses an upper or lower shut-off threshold during a shut-off period. The measured sensor output signal can be used once again when the shut-off period ends. A 'sensor degraded' condition can be indicated when the monitor signal crosses an upper or lower degradation threshold.

## Description

Monitoring devices that include one or more sensors can be subject to various shock events or harsh environmental effects that degrade sensor operation. For example, shock disturbances can disrupt the ability of sensors to carry out their intended functions; operation of a monitoring device in a desert environment can result in dust particles interfering with sensor operation and therefore degrading the performance of some sensors. Sensor degradation is problematic in many applications, particularly in the use of guided munitions.

The effective use of guided munitions requires electronic hardware and software components to survive and function normally at high levels of stresses and other similar shock events. Such stringent demands are required for precision guided munitions that use an inertial measurement unit (IMU) for inertial guidance. Functional IMUs can be produced using micro-electro-mechanical systems (MEMS) technology. MEMS technology typically includes small mechanical elements micromachined into a silicon substrate, which also contains microcircuitry in the form of embedded microprocessors.

A MEMS IMU is a closed system that is used to detect altitude, location, and motion of a vehicle. Typically, the IMU uses a combination of inertial sensors including accelerometers and gyroscopes to track how the vehicle is moving and where it is located. The IMU detects the current acceleration and rate of change in attitude (*i.e*., roll, pitch, and yaw rates) and then sums them to find the total change from the initial position.

When guided projectiles that use MEMS IMUs are launched at high speed, they are subject to large accelerations and high vibrations, particularly when being propelled through a tube or during canard deployment. There is a momentary shut-off of these MEMS IMUs when subjected to large shock magnitudes on the order of thousands of *g*'s (1*g* ≈ 32 ft/s²) over a very short duration, such as during canard deployment. The resulting signal loss causes the MEMS IMU to supply inaccurate measurements over the shock duration, which leads to imprecise targeting and potentially disastrous results. Device shut-off under shock may be due to fingers of a MEMS gyroscope getting stuck or proof mass getting stuck to electrodes, among other effects. Employing extra isolators or other purely hardware solutions is impractical in this case because of weight/size constraints and the microscopic scales at which these devices operate.

The present invention relates to a method and system for detection and remediation of sensor degradation in a monitoring device. The method comprises defining or selecting a monitor signal, and setting at least one monitor signal range bounded by one or more upper thresholds and one or more lower thresholds for degradation and/or shut-off detection. At least one measured sensor output signal is selected from the monitoring device that is within the monitor signal range. A predicted proxy sensor signal is generated concurrently with the measured sensor output signal in real-time. The predicted proxy sensor signal is blended with the measured sensor output signal at an onset of a shut-off period or just prior to recovery from the shut-off period. The predicted proxy sensor signal is used in place of the measured sensor output signal when the monitor signal crosses an upper or lower shut-off threshold during the shut-off period. A 'sensor degraded' condition can be indicated when the monitor signal crosses an upper or lower degradation threshold.

### IN THE DRAWINGS

Features of the present invention will become apparent to those skilled in the art from the following description with reference to the drawings. Understanding that the drawings depict only typical embodiments of the invention and are not therefore to be considered limiting in scope, the invention will be described with additional specificity and detail through the use of the accompanying drawings, in which:

Figure 1 depicts an exemplary architecture of a system for detection and remediation of sensor degradation in a monitoring device according to one embodiment of the invention;

Figures 2A-2C are graphs of an exemplary simulated monitor signal including its first and second time derivatives; and

Figure 3 is a graphical representation of a method for remediation of sensor shut-off in a monitoring device.

The present invention relates to a method and system for detection and remediation of sensor degradation in a monitoring device. The monitoring device can have one or more sensors and is typically mounted on a platform such as a vehicle. In general, the present method utilizes real-time predictive filtering implemented by an algorithm that outputs high integrity proxy signals to replace signal measurements lost during temporary shut down of the monitoring device. For example, real-time present sensor measurements are combined with predictions from past sensor measurements. The present sensor measurement is replaced with the predicted sensor measurement when the present sensor measurement lies outside of a threshold it could not possibly exceed given the platform on which the monitoring device is mounted.

The method and system can be implemented in any monitoring device mounted to a platform that is subject to a shock event or other environmental influence causing the device to degrade or shut down temporarily. The present method is particularly useful in monitoring devices having one or more sensors such as MEMS-based inertial measurement units (IMUs) used on guided munitions and launch vehicles. While the present method and system particularly improve guidance and navigation performance in MEMS IMUs by mitigating shock events, the present method and system may be used in other applications as well. Examples of such applications include the guidance module in directional drilling tools used for oil and gas exploration, or multi-sensor fusion for autonomous navigation in which the prompt detection of degradation in sensor performance is important for continued integrity of the sensor fusion solution.

The present method utilizes a combination of sensor signal measurement and computational signal prediction, which allows the monitoring device to blend the two signals or switch back and forth between them, depending upon whether the monitoring device is within or outside of a nominal operating condition and how far the monitoring signal and its time derivatives are from nominal.

While the present method and system are generally described in the context of a MEMS IMU, it should be understood that the method can be implemented in other microprocessor operational software associated with monitoring devices that can temporarily shut down because of a platform shock event or other environmental influence.

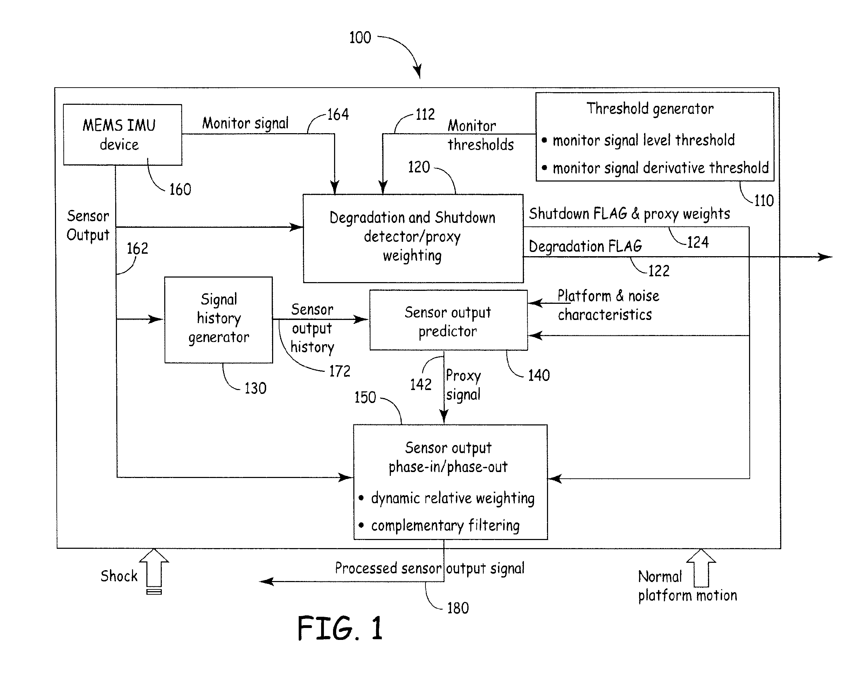

Figure 1 depicts an exemplary architecture of a system 100 for detection and remediation of sensor degradation in a monitoring device having one or more sensors, such as a MEMS IMU device, according to one embodiment. The IMU device is typically mounted on a platform that is subject to rotational and/or translational motion. The sensors can be any sensor that is potentially affected by a shock event such that the sensor signal temporarily fails. For example, the sensor can be a MEMS gyroscope in an IMU that temporarily fails because the fingers of the MEMS gyroscope get stuck under the shock or the proof masses get stuck to the electrodes.

The system 100 includes a threshold generator module 110, a degradation and shutdown detector/proxy weighting module 120, a signal history generator module 130, a sensor output predictor module 140, and sensor output phase-in/phase-out module 150. In one embodiment, these module components can be implemented in firmware and loaded on the gyro cluster board of a MEMS IMU device.

Outputs from a monitoring device 160 such as a MEMS IMU device provide an actual sensor output signal 162 and a monitor signal 164. The sensor output signal represents the primary signal of interest typically measured using the IMU device (for instance, voltage signals that capture platform attitude rate information). This is the signal affected adversely by shock and the signal that the present system provides a proxy signal for during shock-induced shut down of the primary IMU device.

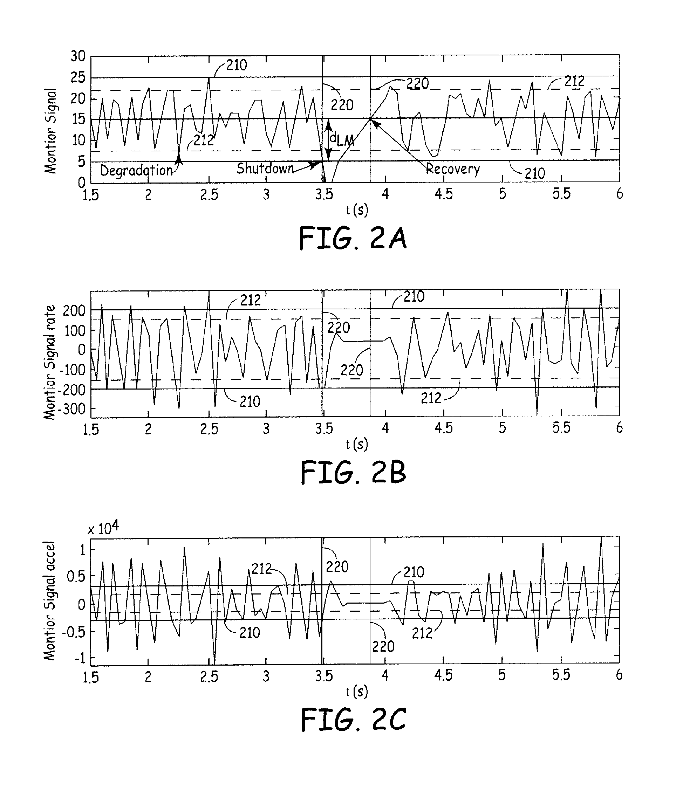

The monitor signal 164 is another signal output from the IMU device that provides information about the 'health' of the IMU device. The monitor signal provides the most accurate information about the effect of shock on the IMU device. For some IMU devices, the monitor signal can be the same as the sensor output itself. In other cases, the monitor signal can be derived from a multiplicity of available sensor signals, and characteristics of the platform on which the sensor is mounted and the environment in which the sensor operates. An example of a simulated monitor signal including its first and second time derivatives is depicted in the graphs of Figures 2A-2C. Figure 2A shows signal level thresholds, Figure 2B shows signal rate thresholds, and Figure 2C shows signal acceleration thresholds.

During operation of system 100 in Figure 1, threshold generator module 110 sets thresholds on the monitor signal and its time derivatives. The output from threshold generator module 110 includes monitor threshold signals 112 that are communicated to the degradation and shutdown detector/proxy weighting module 120 and are used in shutdown and degradation detection logic. The threshold signals 112 can include an outer threshold signal level and an inner threshold signal level. The outer threshold signal level is the shutdown threshold (*i.e*. used to detect sensor shut-down) and is shown in Figures 2A-2C as solid horizontal lines 210. The inner threshold signal level is the degradation threshold and is shown in Figures 2A-2C as dashed horizontal lines 212. The inner threshold signal level is used to provide an indication of the onset of sensor degradation. The solid vertical lines 220 in Figures 2A-2C show the onset of and recovery from shut-down when the monitor signal crosses the outer threshold signal level. The threshold generator module 110 can be a fixed off-line unit or one that sets the thresholds dynamically (from conservative to non-conservative) based on changes in platform loading and environmental conditions.

The degradation and shutdown detector/proxy weighting module 120 has a first output 122 that provides a degradation flag signal indicating the degrading of sensor output signal 162. A second output 124 provides a shutdown flag signal that indicates whether or not the IMU device is shut down and how far from recovery it is (in the form of a weighting on the proxy signal). The degradation and shutdown detector/proxy weighting module 120 receives as input monitor signal 164, sensor output signal 162, and monitor threshold signals 112. Essentially, when all three signals depicted in Figures 2A-2C fall outside of the outer threshold signal level simultaneously, the IMU device is considered to be shutdown. It should be noted that there is some predictive character to the way shutdown is determined in that the monitor signal level is not the only factor considered in deciding that shutdown has occurred. The proxy signal weight is a function of the difference between nominal monitor signal level and actual signal level during shutdown (this is d_{LM} in Figure 2A).

The signal history generator module 130 receives an input comprising the sensor output signal 162 and has an output comprising a sensor output history signal 172 that is communicated to the sensor output predictor module 140. The signal history generator module 130 basically keeps a running history of sensor output signal 162. The time horizon is set so that sufficient past information is available for sensor output predictor module 140 to compute an appropriate proxy signal.

The sensor output predictor module 140 receives historical sensor output information, platform and noise characteristics, shutdown flag and proxy weights, as well as all available domain knowledge, and applies a real-time predictive filter to this information. There is no restriction on the specific form of the predictive filter, so most forms of recursive filters whose predictions are based on probabilistic and/or estimation-theoretic concepts will work.

For example, a real-time predictive filtering algorithm can be used to generate highly reliable proxy signals during temporary sensor shut down. The algorithm can use real-time predictive filtering techniques, such as standard Kalman filtering, finite impulse response (FIR) filtering, infinite impulse response (IIR) filtering, and simple non-linear extrapolation, for example. If noise characteristics are known, optimal filters, such as discrete FIR filters, discrete Kalman filters, or continuous Kalman filters and predictors can be used. The output from sensor output predictor module 140 is a proxy signal 142, which is communicated to sensor output phase-in/phase-out module 150. The proxy signal 142 represents a prediction of what the sensor output would be if shutdown had not occurred.

The sensor output phase-in/phase-out module 150 also receives an input comprising sensor output signal 162 as well as the shutdown flag and proxy weight signals from the degradation and shutdown detector/proxy weighting module 120, and has an output comprising a processed sensor output signal 180. The sensor output phase-in/phase-out module 150 provides the function of a smooth phase-in of the proxy signal during shut down and a corresponding smooth phase-out when the IMU device recovers. Essentially, the shutdown flag and how far the IMU device is from recovery are used dynamically to compute an appropriate weighting on the proxy signal. The complement of this weight is then applied to the actual sensor output signal (a form of complementary filtering) so that, when the IMU device recovers, there is little or no transient in the processed sensor output signal from the IMU device.

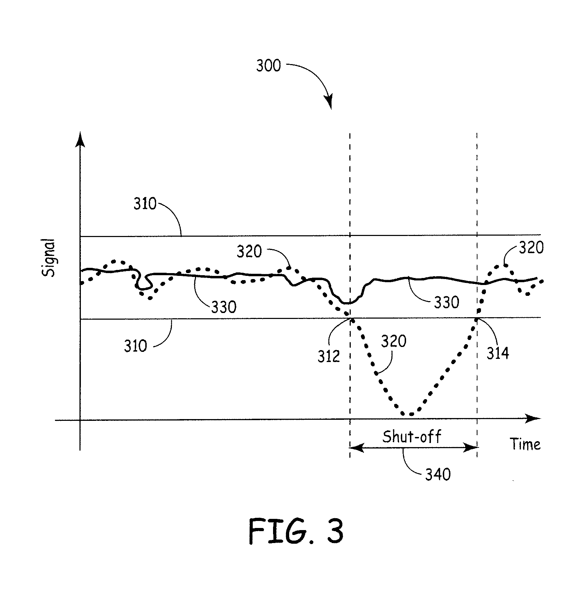

Figure 3 is a graphical representation of a method 300 for remediation of sensor shut-off that can be used for a monitoring device mounted to a platform, which is potentially subject to a shock event. The vertical axis on the graph represents the measurement value of a signal from a sensor of the monitoring device, and the horizontal axis represents the passage of time during which the sensor is intended to be operational. In the particular scenario depicted, the sensor output signal is also the monitor signal. This signal and its time derivatives are used to set the thresholds appropriately and also detect a shutdown condition.

A sensor signal range bounded by upper and lower thresholds 310 is predetermined for a particular measured sensor output signal 320 (dotted line). A predicted proxy sensor signal 330 (solid line) is generated concurrently with the measured sensor output signal in real-time during normal operation of the sensor until a signal interrupting event occurs such as a shock. Such an event results in sensor output signal 320 crossing a threshold 310 at a threshold crossing point 312, during which a sensor shut-off period 340 is indicated. The predicted proxy sensor signal 330 continues to be used by the monitoring device during shut-off period 340. The predicted proxy sensor signal 330 used during the shut-off period can be generated based on a previous average of the measured sensor output signal 320. When shut-off period 340 ends at a threshold crossing point 314, sensor output signal 320 is once again used by the monitoring device. The predicted proxy sensor signal 330 can be blended with the measured sensor output signal 320 at the onset of shut-off period 340 and just prior to full recovery from shut-off period 340.

In implementing the method of the invention in a particular monitoring device, an initial determination is made of the most reliable monitor signal among candidate signals for selection as the monitor signal to be used. This should be the signal that provides the most reliable indication of impending sensor shut-off during a signal interrupting event such as a shock event. Alternatively, the monitor signal can be defined from other available signals by combining these signals in a suitable mathematical expression.

A determination is then made of the sources and nature of platform dynamics information. The monitor signal thresholds, timing requirements, and prediction horizons for proxy signal generation are established using a characterization of the noise and dynamics of the platform on which the monitoring device is mounted. For example, in applying the present method to an IMU device, various parameters are considered, such as IMU measurements prior to shock, shock characteristics, and the dynamics of the platform on which the IMU device is mounted, to provide the proxy signal during sensor shut-off.

The noise level in the monitor signal measurement can be used to determine the threshold setting. Thresholds can also be set on the rate of change of the measurement, in addition to the measurement itself. The noise level and therefore the threshold can be pre-computed for a particular sensor. Establishing the thresholds for phase-in/phase-out of the proxy signal can be accomplished with statistical characterization of monitor signal bounds beyond which there is the greatest probability of sensor shut-off For example, a sensor signal range can be set with a 99.9% confidence level that the measured sensor output signal will not go beyond a threshold value of the sensor signal range until sensor shut-off occurs or is impending.

The shock magnitude expected to be encountered by the sensor during operation is used to determine the confidence level for the threshold setting. For a given shock magnitude in g's, the procedure to set the threshold includes: 1) setting an initial threshold value; 2) checking performance of the predictive sensing system with an ideal sensor, and also performance of the system in which it is used (if possible); and 3) repeating steps 1 and 2 until performance is acceptable.

Instructions for carrying out the various process tasks, calculations, control functions, and the generation of signals and other data used in the operation of the method and systems described herein can be implemented in software, firmware, or other computer readable instructions. These instructions are typically stored on any appropriate computer readable media used for storage of computer readable instructions or data structures. Such computer readable media can be any available media that can be accessed by a general purpose or special purpose computer or processor, or any programmable logic device.

Suitable computer readable media may comprise, for example, non-volatile memory devices including semiconductor memory devices such as EPROM, EEPROM, or flash memory devices; magnetic disks such as internal hard disks or removable disks; magneto-optical disks; CDs, DVDs, or other optical storage disks; nonvolatile ROM, RAM, and other like media. Any of the foregoing may be supplemented by, or incorporated in, specially-designed application-specific integrated circuits (ASICs). When information is transferred or provided over a network or another communications connection (either hardwired, wireless, or a combination of hardwired or wireless) to a computer, the computer properly views the connection as a computer readable medium. Thus, any such connection is properly termed a computer readable medium. Combinations of the above are also included within the scope of computer readable media.

The method of the invention can be implemented in computer readable instructions, such as program modules or applications, which are executed by a data processor. Generally, program modules or applications include routines, programs, objects, data components, data structures, algorithms, etc. that perform particular tasks or implement particular abstract data types. These represent examples of program code means for executing steps of the method disclosed herein. The particular sequence of such executable instructions or associated data structures represents examples of corresponding acts for implementing the functions described in such steps.

The present invention may be embodied in other specific forms without departing from its essential characteristics. The described embodiments and methods are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A method for detection and remediation of sensor degradation in a monitoring device, the method comprising:
defining or selecting a monitor signal (164);
setting at least one monitor signal range bounded by a first upper threshold and a first lower threshold;
selecting at least one measured sensor output signal from the monitoring device (160) that is within the monitor signal range;
generating a predicted proxy sensor signal concurrently with the measured sensor output signal in real-time;
blending the predicted proxy sensor signal with the measured sensor output signal at an onset of a shut-off period or just prior to recovery from the shut-off period; and
using the predicted proxy sensor signal in place of the measured sensor output signal when the monitor signal crosses the upper threshold or the lower threshold during the shut-off period.

2. The method of claim 1, wherein the monitor signal range defines an outer threshold signal level beyond which the shut-off period begins, and the method further comprises setting an additional monitor signal range bounded by a second upper threshold and a second lower threshold, the additional monitor signal range defining an inner threshold signal level beyond which sensor signal degradation is indicated.

3. The method of claim 1, further comprising using the measured sensor output signal when the shut-off period ends.

4. The method of claim 1, wherein the predicted proxy sensor signal is generated by real-time predictive filtering.

5. The method of claim 1, wherein the predicted proxy sensor signal used during the shut-off period is generated based on an average value of the measured sensor output signal prior to the shut-off period.

6. A system for detection and remediation of sensor degradation in a monitoring device, the system comprising:
a threshold generator module (110);
a degradation and shutdown detector/proxy weighting module (120) in communication with the threshold generator module;
a sensor output predictor module (140) in communication with the degradation and shutdown detector/proxy weighting module;
a signal history generator module (130) in communication with the sensor output predictor module; and
a sensor output phase-in/phase-out module (150) in communication with the degradation and shutdown detector/proxy weighting module and the sensor output predictor module.

7. The system of claim 6, wherein the monitoring device comprises a MEMS inertial measurement unit and wherein the inertial measurement unit comprises one or more gyroscopes, one or more accelerometers, or combinations thereof.

8. The system of claim 6, wherein the degradation and shutdown detector/proxy weighting module has an output comprising a shutdown flag signal and a proxy weight signal that are communicated to the sensor output predictor module and the sensor output phase-in/phase-out module.

9. The system of claim 6, wherein the sensor output predictor module has an output comprising a proxy sensor signal that is communicated to the sensor output phase-in/phase-out module.

10. The system of claim 6, wherein the sensor output phase-in/phase-out module receives inputs comprising a sensor output signal, a shutdown flag signal, and a proxy weight signal.
